# EUROPEAN PATENT APPLICATION

(11) **EP 3 453 915 A1**
(43) Date of publication of application: **13.03.2019**
(21) Application number: 18192505.8
(22) Date of filing: 04.09.2018
(51) Int. Cl.: F16G 11/14, F16B 45/02

(54) **CARABINER**

(30) Priority: 07.09.2017 GB 201714368
(71) Applicant: DMM International Ltd, Caernarfon, Gwynedd LL55 4EL (GB)
(72) Inventor: Hall, Frederick Allan, Caernarfon, Gwynedd LL55 4EX (GB); Tanner, Elliot, Caernarfon, Gwynedd LL55 4EL (GB)
(74) Representative: Hamilton, Alistair

(57) **Abstract**

A carabiner is disclosed that comprises a metal body (10) and a gate (16), in which the body has an opening and the gate can be pivoted between a closed position in which it closes the opening and an open position in which an item can be passed through the opening. The body (10) is formed from a metal core (20) at least partially over moulded with a cover layer (24) of sound-absorbing polymer material. In some embodiments, the coating is absent from some regions of the body such those regions of the carabiner (e.g., the rope basket (26)), over which loaded ropes slide when in use or the nose (12).

## Description

The present invention relates to carabiners.

Carabiners have many applications in climbing and rope access. A typical carabiner has a body, often approximately C-shaped, having an opening, and a gate. The gate is pivoted at an end portion of the body adjacent to the opening, and can be moved between a closed position, in which it closes the opening, and an open position in which a rope or similar component can be passed into or out of the body through the opening. Typically, the gate is biased towards the closed position, and in many cases, there is a locking arrangement that must be released before the gate can be moved away from the closed position.

In the context of this specification, the word "carabiner" shall be used to refer to a range of connection devices and shall be considered synonymous with terms such as "connector", "link", "joiner", "shackle", "metal loop", "C-shaped loop", "krab", "quickdraw", etc.

A typical carabiner can be a noisy device in use. They produce audible clicks when they impact with another metal object such as a carabiner or other metal rigging component or when they are dropped. Moreover, it is normal when a carabiner is being used that the open gate will be allowed to close under the action of the biasing force. When the closing gate makes contact with the body, the impact produces noise, as does the subsequent engagement of the locking arrangement. In many applications, this noise acts as useful feedback to the user that confirms closure of the carabiner. (If closure of the gate is obstructed, then the noise made will be audibly different.) However, there are other situations in which noise produced by a carabiner will cause an unwelcome disturbance or will draw unwanted attention to its user.

It is known to make carabiners wholly or partly from polymers. These can operate quietly. While they are suitable for securing and attaching gear and accessories (as a so-called "racking carabiner"), but insufficiently strong for use as personal protective equipment. There have also been *ad hoc* attempts to reduce the noise of a carabiner by wrapping or dipping the carabiner in a sound-absorbing material. However, these do not reduce the noise of opening or closing of gates and they also affect the cross-sectional profile of the carabiner which limits its fitting to other products and the protected areas are susceptible to damage from loading from other equipment.

To this end, the present invention provides a metal body and a gate, in which the body has an opening and the gate can be pivoted between a closed position in which it closes the opening and an open position in which an item can be passed through the opening, in which the body is formed from a metal core at least partially covered (e.g., over moulded) with a cover layer of material, such as a sound-absorbing and/or polymer material.

Embodiments of the invention combine a full-strength metal body with a coating in areas that might be a source of noise or require protection against impacts.

The body may be entirely covered by the coating. Alternatively, the coating may be omitted (optionally omitted only) from one or more of: regions where it is not required; regions of high loading; or where it might be subject to excessive wear, which may ensure that the weight of the moulded material is kept to a minimum and that operation of the carabiner is not compromised. The covering material need not be specifically intended for use in sound absorption; it need only have physical properties suitable for absorbing sound or inhibiting the creation of sound in this specific application. The properties of such a material will be familiar to a person skilled in the technical field or can be determined by way of routine experiment.

Typically, the cover layer is absent at those parts (optionally absent only at those parts) of the body that are, in use, subject to significant sliding contact from a rope or other item passing through the carabiner. For example, the cover layer is absent at a rope basket region of the body. Alternatively or additionally, the cover layer may be absent at a region (optionally absent only at a region) at which the gate pivots on the body so as not to effect normal operation.

In a typical carabiner, the body includes a nose that is received in a recess in the gate when the gate is in the closed position. In such embodiments, the cover layer may cover the nose, the covered nose being a close fit within the recess. That is, there is sufficient clearance between the core and the recess to accommodate the cover layer. Alternatively, the cover layer may absent at the nose and/or the recess. In such cases, there is preferably a buffer block of resilient material in the recess to prevent metal-to-metal contact as the gate closes, and sufficient clearance present in at either side of the nose to the recess so nose does not touch metal within the recess when the gate is closing.

The cover layer may include one or more regions of increased thickness to enhance its effectiveness in limiting noise. The regions of increased thickness include one or more projecting region for example shaped as a projecting rib. These may prevent metal parts of the carabiner making contact with the ground in the event that the carabiner is dropped. Such regions may be in the form of ribs.

In embodiments of the invention, the gate or a component thereof may comprise a metal core partially over moulded with a cover layer of sound-absorbing polymer material. For example, the carabiner may be a screwgate carabiner, the gate having a locking barrel that comprises a metal core partially over moulded with a cover layer of sound-absorbing polymer material.

The cover layer may be of contrasting colour or tone to the core. Alternatively, it may be of similar colour to the core. The cover layer and the core may be black to minimise its visual appearance.

At least part of an outer surface of the cover layer may be formed with a texture, which may be functional and/or decorative. The outer surface of the cover layer may be formed with indicia, which may be alphanumeric characters such as a serial number or identifying text.

It is to be understood that the above discussion of regions in which the cover layer is present or is absent, and the various configurations of the cover layer are not mutually exclusive, and that they may be freely combined in the one embodiment. In addition, various arrangements of a cover layer can be applied to carabiners having many different types, sizes and shapes of body.

Embodiments of the invention will now be described in detail, by way of example, and with reference to the accompanying drawings, in which:
Figures 1 and 2 show a carabiner being a first embodiment of the invention with a gate in a closed and an open position;
Figure 3 shows a metal core of a body being a component of the embodiment of Figures 1 and 2;
Figure 4 shows the component of Figure 3 with a polymer coating shown as a transparent outline;
Figure 5 shows the embodiment of Figures 1 and 2 in part cross-section;
Figure 6 shows a detail of the component of Figure 3;
Figures 7 and 8 are partial sections of a nose region of the embodiment of Figures 1 and 2;
Figure 9 shows the shape of a cover layer of the body of Figure 3;
Figures 10 and 11 show a carabiner being a second embodiment of the invention;
Figures 12 and 13 are sectional views through part of the carabiner of Figures 10 and 11;
Figure 14 is a partly-transparent view of the part of the carabiner shown in Figures 12 and 13;
Figure 15 is a section through a median plane of the carabiner of Figures 10 and 11;

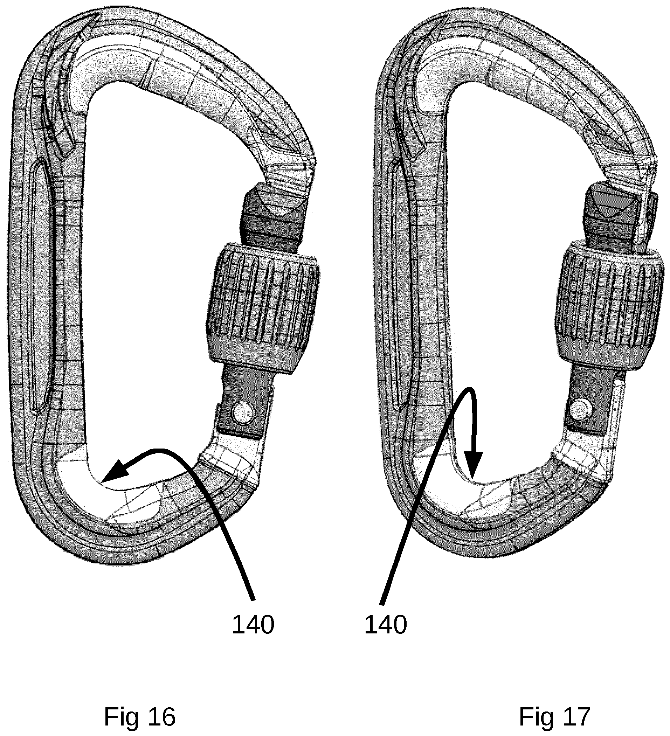

Figures 16 and 17 show a carabiner being a first variation of the carabiner of Figures 10 and 11; and
Figures 18 and 19 show a carabiner being a second variation of the carabiner of Figures 10 and 11.

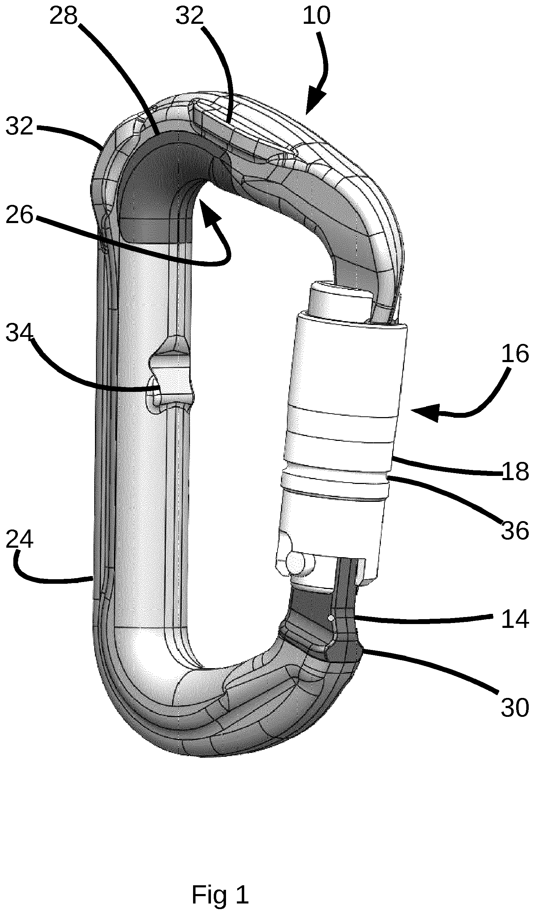

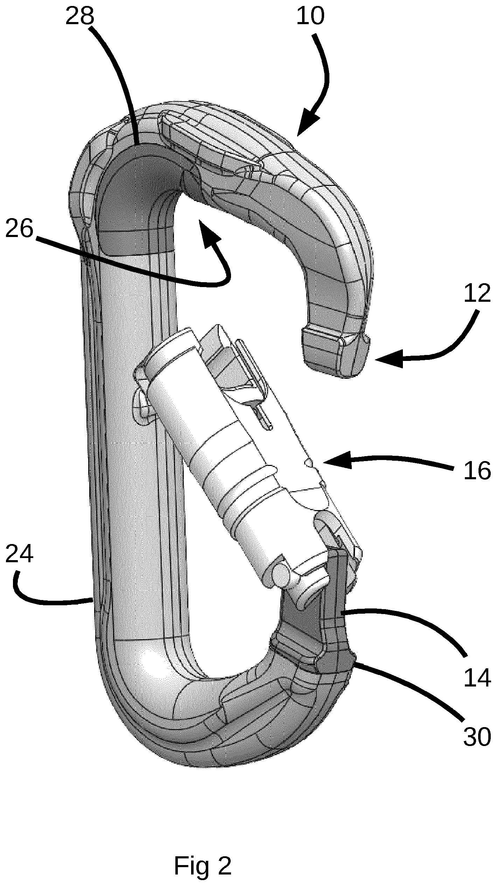

With reference to the drawings, an embodiment of the invention is a carabiner comprises a generally C-shaped body 10 that is symmetrical about a median plane. The body has a back (which may also be called the "spine") that extends between a nose 12 and a pivot region 14 between which an opening is defined. A gate 16 is carried on the pivot region 14. The gate 16 can pivot in the plane of the body between a closed position, shown in Figure 1, in which it forms a complete loop with the body 10 and closes the opening, and an open position in which one end of the gate 16 is spaced from the nose 12, as shown in Figure 2.

The gate 16 is made in accordance with one of many design variants, in this example, incorporating a barrel 18 that must be rotated and translated against the action of a return spring in order to allow the gate 16 to be opened.

Insofar as it has been described, the carabiner is essentially conventional. These features represent a typical example of the manner in which the invention can be embodied and do not in any way limit the scope of the invention.

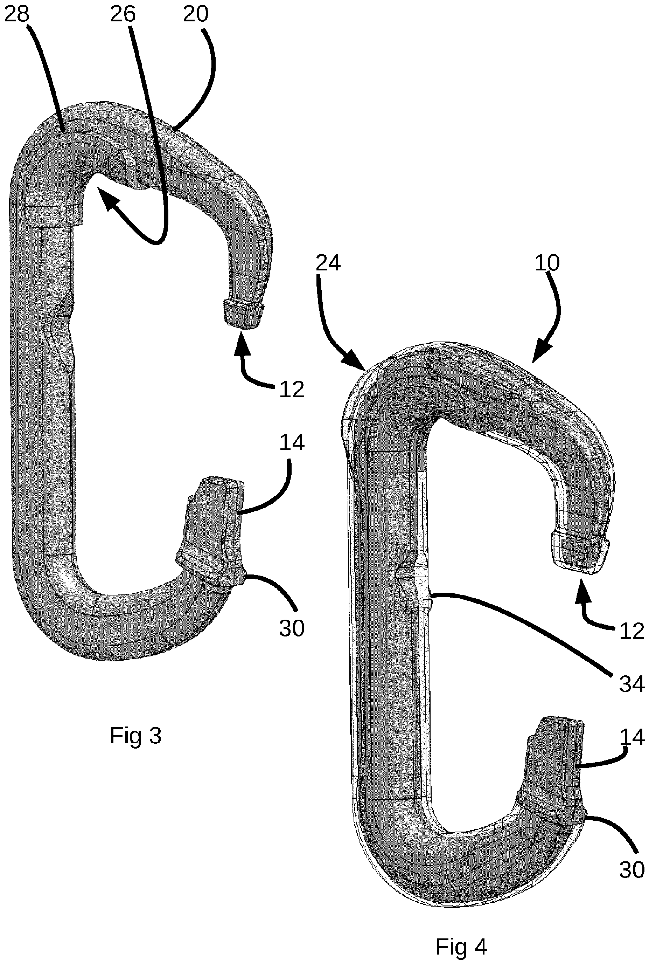

The body 10 has a core 20, shown in Figure 3, that is unitary and formed of metal, for example, as an alloy forging. Superficially, the core appears similar to the body of a conventional carabiner, although differences will be noted below, and the core is designed to withstand all of the loading that the body 10 will be intended to withstand in accordance with the design principles used in designing a conventional carabiner body.

The body further comprises a cover layer 24 of soft plastic material that is over-moulded onto the core 20 whereby the cover layer 24 is permanently bonded to the core 20. The cover layer 24 does not cover the entire core 20. A region of the core body known as the rope basket and indicated at 26 is not covered by the cover layer 24 and the pivot region 14 is likewise uncovered. The rope basket 26 is uncovered because it is the part of the carabiner body that has a large-radius curve that is most commonly in contact with a sliding rope. Presence of the cover layer 24 in the rope basket 26 would significantly increase the sliding friction of such a rope and the cover layer would be subject to rapid wear and because the rope basket is subject to high loading forces. The pivot region 14 is uncovered to avoid inhibition of pivotal movement of the gate 16.

Other shapes and configurations of carabiner may have differently sized and shaped regions subject to wear and sliding friction, and these will be left uncovered as required. It may be that there is more than one such region in other embodiments.

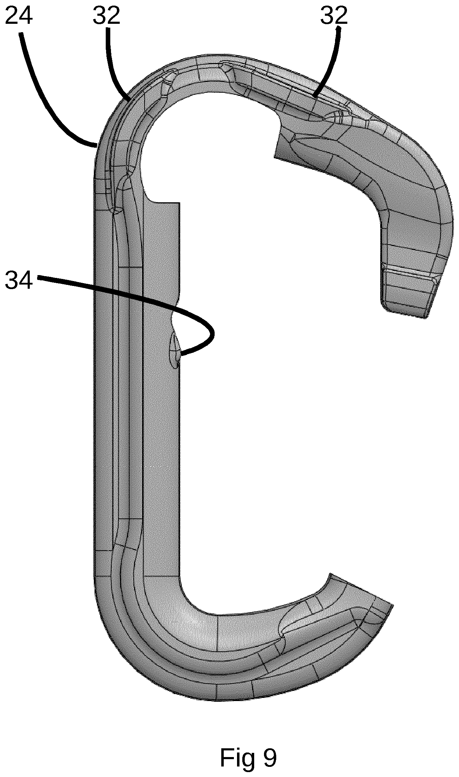

The shape of the cover layer 24 is shown in Figure 9. It should be noted that this does not exist as a separate component since the cover layer 24 is formed by moulding onto the core 20.

The core 20 is shaped to provide a smooth transition at edges of the cover layer 24. As will be seen in Figures 3 and 4, this is achieved in the region of the rope basket 26 by forming a projecting land 28 on the core 20. The land 28 projects a distance that is substantially equal to or slightly greater than the thickness of the cover layer 24. This helps to ensure that the rope runs on the metal areas and can also help the moulding process. Adjacent to the pivot region 14, a collar 30 is formed around the core 20, projecting to a height substantially equal to or slightly greater than the thickness of the cover layer 24. This avoids the creation of steps that could be snagged by items connected to the carabiner and also projects the edges of the cover layer 24 from damage and wear.

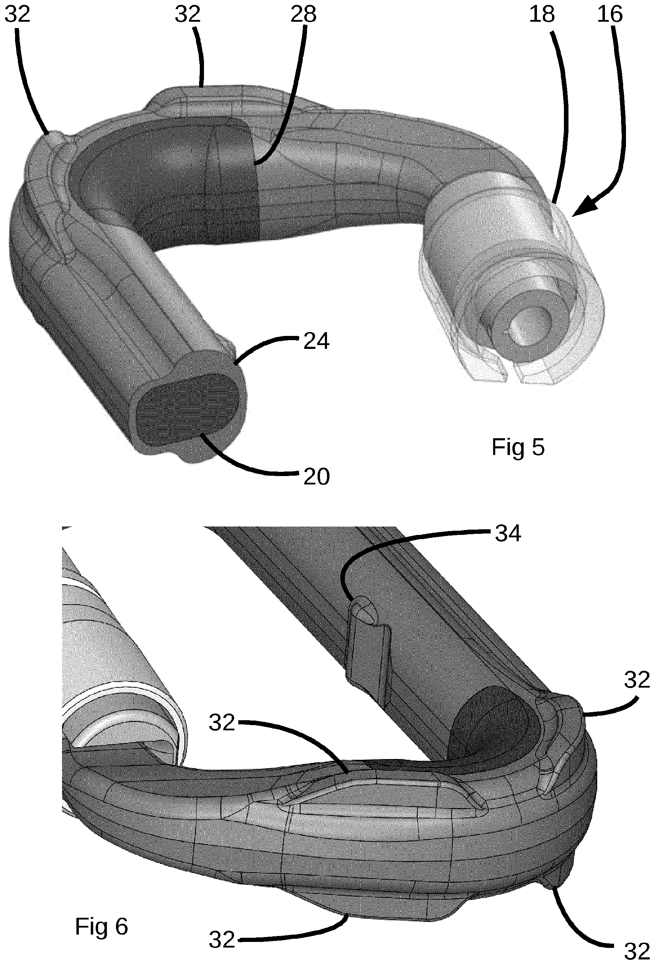

As shown in Figure 6, the cover layer 24 may include shapes and formations that are not present in the core 20. In this example, the cover layer 24 has several ribs 32 that project from it perpendicular to the plane of the body 10. In the event that the carabiner is dropped onto a surface, these projections reduce the likelihood that the metal of the gate 16 will make contact with the surface, with the ribs 32 instead serving to break the fall of the carabiner, producing little sound as they do so. In addition, the cover layer 24 may be provided with a formation 34 opposite the opening that acts as a buffer against which the gate 16 makes contact when fully open. This serves to remove a further potential source of noise during operation of the carabiner.

It will be seen that, in this example, the cover layer 24 extends to the nose 12 of the carabiner. This is required in order to reduce the noise that the carabiner produces when the gate is opened and closed which is typically the main source of noise produced by a carabiner. The strength of a carabiner relies on a positive, inetrlocking engagement between the nose 12 and the gate 16 to create a closed loop shape (an 'O' shape) when the carabiner is loaded. If the engagement is not effective then the body 10 is effectively loaded as a 'C' shape which may reduce the strength of the carabiner by as much as 60%.

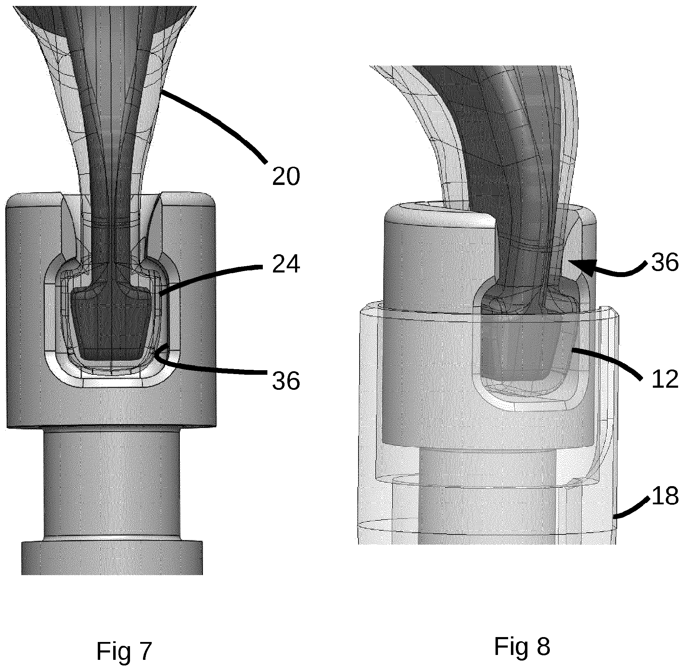

As shown in Figures 7 and 8, the gate has a recess 36 in which the nose is received when the gate 16 is closed. The relative sizes of the recess 36 and the nose 12 are selected such that the external dimension of the covered nose 12 is a close fit within the recess 36. This is in contrast to a conventional carabiner in which the metal nose is itself a close fit in the recess.

The barrel 18 of the gate 16 has a circumferential groove extending around it. A rubber O-ring (not shown) may be located in the groove. This serves to reduce the sound emitted by the action of the barrel, particularly when it is allowed to return to the locked position under the action of the return spring.

In the illustrated embodiment, the cover layer 24 is shown as being of a slightly lighter colour than the core 20. Use of a different colour or tone for the cover layer 24 and the core can be exploited to give the carabiner a distinctive appearance and to indicate those parts of the carabiner that can be subject to loading and those parts which should not. Alternatively, the cover layer 24 and the core 20 may be of substantially the same colour and tone, and if these are both black, then the carabiner will have a minimal visual as well as minimal audible profile. Since the cover layer 24 is moulded onto the body 20, its outer surface can be formed with a texture, indicia such as lettering or numbers, or other functional or aesthetic surface configurations. The gate 16 can, likewise, be the same or a different colour or tone from other components of the carabiner, as required.

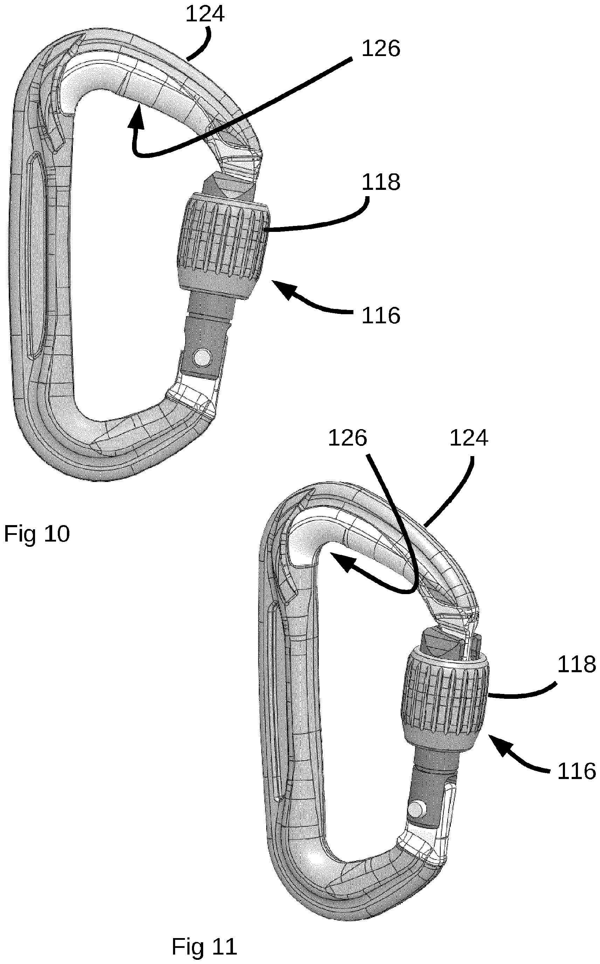

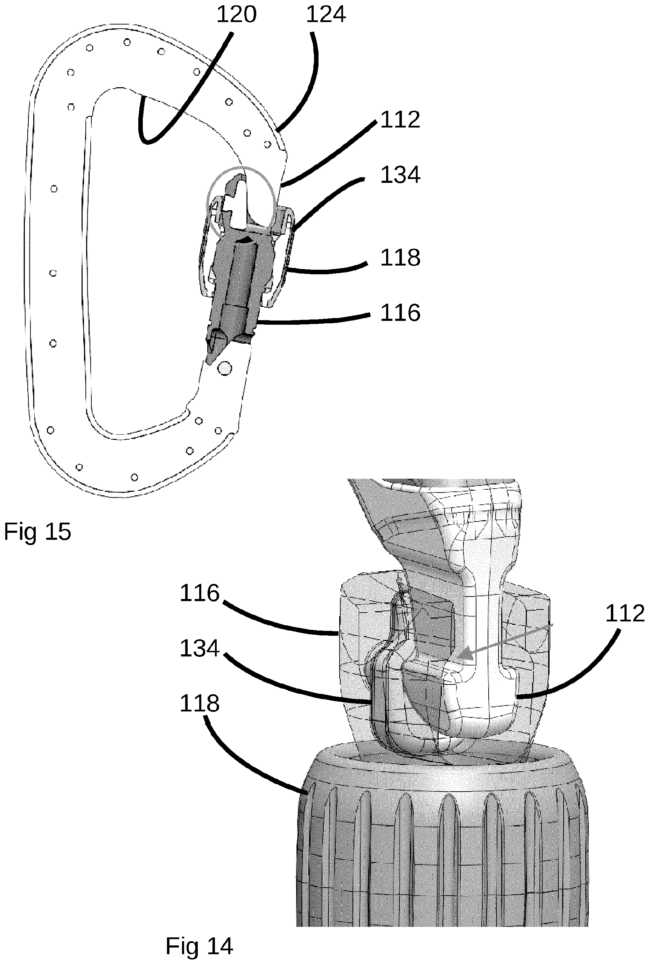

With reference now to Figures 10 to 15, a modification to the embodiment described above is shown. In this embodiment, the rope basket 126 is formed from bare metal of the core 120 along the length of a top beam section of the carabiner. This allows a rope to run on the basket 126 at any point. The cover layer 124 extends along an outer part of the top beam to provide sound-deadening protection along its length.

This embodiment has the form of a screwgate carabiner, which will be familiar to those skilled in the technical field, in which a barrel 118 is carried in threaded engagement on the gate 116. Rotation of the barrel 118 causes it to move along the gate 116 between a locking position, in which the gate 116 cannot be opened, and an unlocked position in which the gate can open and close. The barrel 118 includes a tubular metal core onto which a cover layer of soft plastic or other sound-absorbing material is moulded.

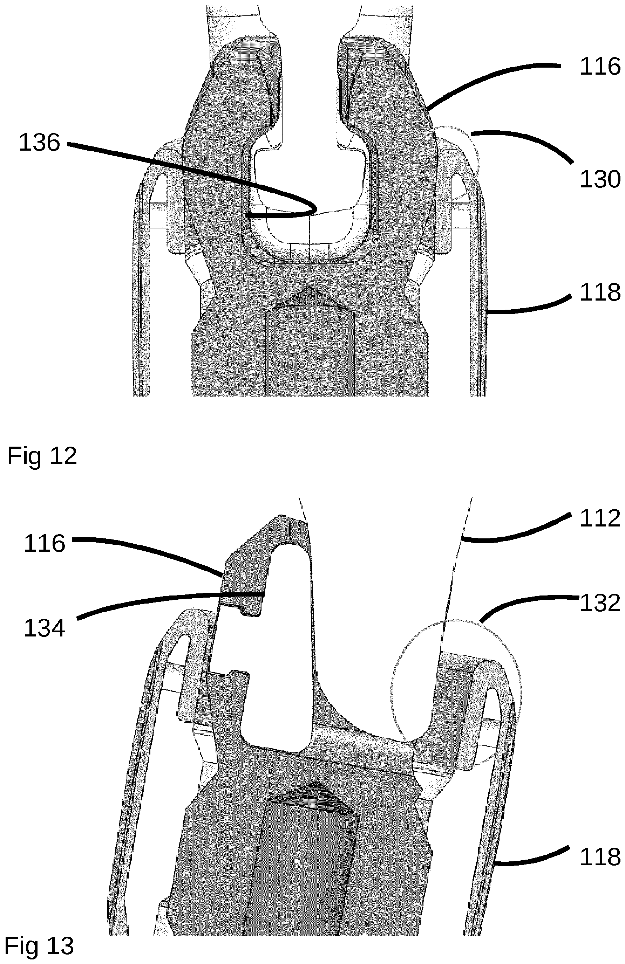

The presence of the cover layer on the barrel has several advantages. Frictional properties of the cover layer on inside surfaces of the barrel 118 where they make contact with the core of the gate 116 (at 130 in Figure 12) resist rotation of the barrel 118 when it is tightened in the locking position. This reduces the chance of the barrel 118 loosening accidentally, for example due to vibration. In addition, the cover layer on the inside of the gate 116 stops or reduces noise from rattling impact contact between the gate 116 and the nose 112 (at 132 in Figure 13) when the gate pivots by a small amount permitted by the barrel 118 when in the locking position. This reduces or eliminates the rattling noise from gates common on normal carabiner designs because no metal-to-metal contact can occur.

The nose 112 of this embodiment and the recess 136 in the gate into which it is received are not provided with a cover layer in this embodiment. This reduces the complication of providing the cover on a critical, load-bearing part of the carabiner.

In order to reduce the amount of noise produced by the nose 112 making contact with the recess 136, an elastomeric block 134 is provided within the recess 136, such that the nose 112 of the carabiner makes contact with the block 134 when the gate 116 closes fully.

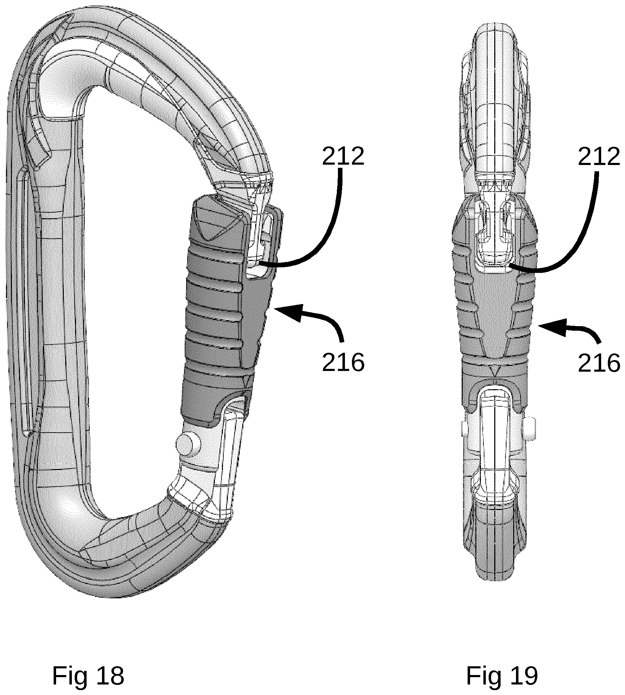

The carabiner of Figures 18 and 19 varies from that of Figures 10 to 15 only in that the cover layer is also absent in a bottom rope basket region 140. This modification can also be applied to other embodiments. It is also possible that some embodiments will have the cover layer absent in a bottom rope basket region 140 but present at the top rope basket 26/126.

The carabiner of Figures 18 and 19 varies from that of Figures 10 to 15 in that the gate 216 does not have a locking arrangement - it is simply held closed by the action of a spring. The gate 216 is formed as a metal core onto which a cover layer of soft plastic or other sound-absorbing material is moulded. As in the embodiment of Figures 10 to 15, an elastomeric buffer block is provided within the recess in the gate, such that the nose 212 of the carabiner makes contact with the block when the gate 216 closes fully.

## Claims

1. A carabiner comprising a metal body (10) and a gate (16), in which the body has an opening and the gate can be pivoted between a closed position in which it closes the opening and an open position in which an item can be passed through the opening, **characterised in that** the body (10) is formed from a metal core (20) at least partially over moulded with a cover layer (24) of sound-absorbing polymer material.

2. A carabiner according to claim 1 in which the cover layer (24) entirely covers the core (20).

3. A carabiner according to claim 2 in which the body (10) includes a nose (12) that is received in a recess (36) of the gate (16) when the gate is in the closed position, the nose being a close fit within the recess, both being covered by the cover layer.

4. A carabiner according to claim 1 in which the cover layer is absent at those parts of the body that are, in use, subject to significant sliding contact from a rope or other item passing through the carabiner.

5. A carabiner according to claim 4 in which the cover layer is absent at a rope basket (26) region of the body (10).

6. A carabiner according to claim 2 or claim 3 in which the cover layer (24) is absent at a region at which the gate pivots on the body.

7. A carabiner according to any one of claims 1 and 4 to 6 in which the body includes a nose (12) that is received in a recess (36) of the gate (16) when the gate is in the closed position the cover layer is absent at the nose and/or the recess.

8. A carabiner according to claim 7 having a buffer block (134) of resilient material in the recess.

9. A carabiner according to any preceding claim in which the cover layer includes one or more regions of increased thickness to enhance its effectiveness in limiting noise, the regions of increased thickness including one or more projecting region (28).

10. A carabiner according to any preceding claim being a screwgate carabiner, the gate (16) having a locking barrel (18) that comprises a metal core partially over moulded with a cover layer of sound-absorbing polymer material.

11. A carabiner according to any preceding claim in which the cover layer (24) is of contrasting colour or tone to the core (20).

12. A carabiner according to any one of claims 1 to 10 in which the cover layer (24) is of similar colour to the core (20).

13. A carabiner according to any preceding claim in which the cover layer and the core are black.

14. A carabiner according to any preceding claim in which at least part of an outer surface of the cover layer is formed with a texture

15. A carabiner according to any preceding claim in which at least part of an outer surface of the cover layer is formed with indicia.
